Europäisches Patentamt

European Patent Office

Office européen des brevets

(19)

(11) Numéro de publication : **0 161 180**
**B1**

(12) **FASCICULE DE BREVET EUROPÉEN**

(45) Date de publication du fascicule du brevet :
17.08.88

(51) Int. Cl.⁴ : **G 09 B   9/04**

(21) Numéro de dépôt : 85400756.4

(22) Date de dépôt : **16.04.85**

(54) **Détecteur de relief pour simulateur de mouvement de véhicule.**

(30) Priorité : **19.04.84 FR 8406215**

(43) Date de publication de la demande :
**13.11.85 Bulletin 85/46**

(45) Mention de la délivrance du brevet :
**17.08.88 Bulletin 88/33**

(84) Etats contractants désignés :
**CH LI**

(56) Documents cités :
**FR-A- 2 044 859**
**FR-A- 2 417 131**
**FR-A- 2 444 310**
**GB-A- 1 000 991**

(73) Titulaire : **THOMSON-CSF**
**173, Boulevard Haussmann**
**F-75379 Paris Cedex 08 (FR)**

(72) Inventeur : **Alet, Robert**
**THOMSON-CSF SCPI 173, bld Haussmann**
**F-75379 Paris Cedex 08 (FR)**
Inventeur : **Marotte, Jean**
**THOMSON-CSF SCPI 173, bld Haussmann**
**F-75379 Paris Cedex 08 (FR)**

(74) Mandataire : **Chaverneff, Vladimir et al**
**THOMSON-CSF SCPI 19, avenue de Messine**
**F-75008 Paris (FR)**

EP 0 161 180 B1

## Description

La présente invention se rapporte à un détecteur de relief pour simulateur de mouvement de véhicule.

La présente invention concerne les simulateurs d'entraînement à la conduite des véhicules du genre de celui décrit par exemple dans le brevet FR-A 2 044 859. Elle a pour objet de restituer de manière plus réaliste le mouvement des véhicules simulés lorsque ceux-ci sont supposés rouler en terrain accidenté, et plus particulièrement lorsqu'ils passent sur un obstacle isolé de faible hauteur.

On sait que la formation des conducteurs est maintenant assurée couramment au moyen de simulateurs dans lesquels les élèves-conducteurs sont placés dans des conditions d'environnement semblables à celles d'une conduite réelle.

Un système de visualisation leur restitue la vue de la route ou du terrain parcourus tandis qu'une plate-forme mobile sur laquelle est monté le poste de conduite, les soumet à des mouvements semblables à ceux qu'effectuerait le véhicule.

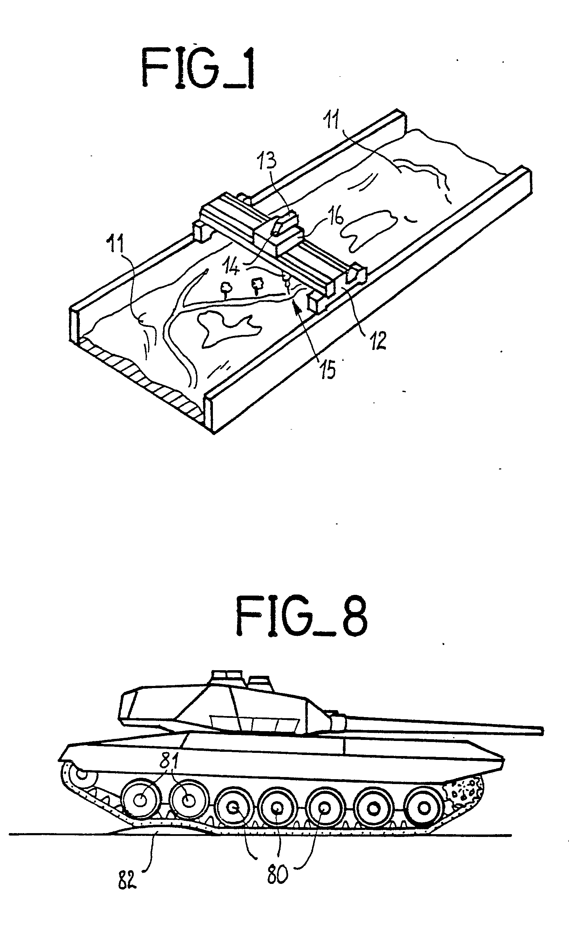

Comme on le voit sur la figure 1, l'image transmise au système de visualisation ainsi que les mouvements du poste de conduite, sont obtenus à partir d'un système 14, de prise de vue et de détection de relief, qui se déplace au contact d'une maquette de terrain 11. Cette maquette simule, à l'échelle voulue, un environnement terrestre formé principalement de routes, de terrains, d'étendues d'eau et de végétation.

Le système de prise de vue et de détection est monté sur un chariot 16 qui se déplace sur un portique 12. Les déplacements du chariot et du portique sont commandés par un calculateur selon les actions de l'élève-conducteur sur les commandes.

Cet ensemble est particulièrement bien adapté à l'entraînement à la conduite des chars de combat.

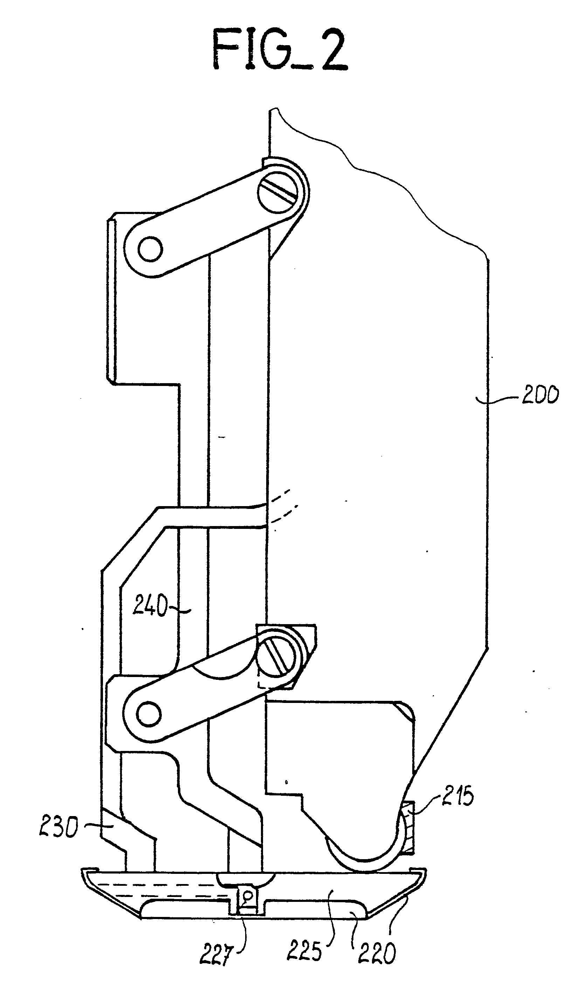

La partie inférieure 15 du système est représentée sur la figure 2. Elle comprend principalement un prisme optique 215 et un ensemble détecteur de relief formé par un sabot 225, un patin 220, des bielles d'articulation 230 et 240 et des tiges de liaison non représentées.

Le prisme renvoie verticalement par un système optique non représenté, et vers une caméra de télévision 13 (figure 1) les rayons lumineux situés dans un champ optique semblable à celui du conducteur.

Le sabot 225 est articulé aux extrémités de deux bielles 230 et 240 qui sont mobiles, en particulier par rapport à la structure principale 200. Celle-ci est liée au portique et peut monter ou descendre par rapport à ce dernier. Sa hauteur au-dessus de la maquette est réglée notamment de manière à ce que le prisme reste à une distance constante du sabot.

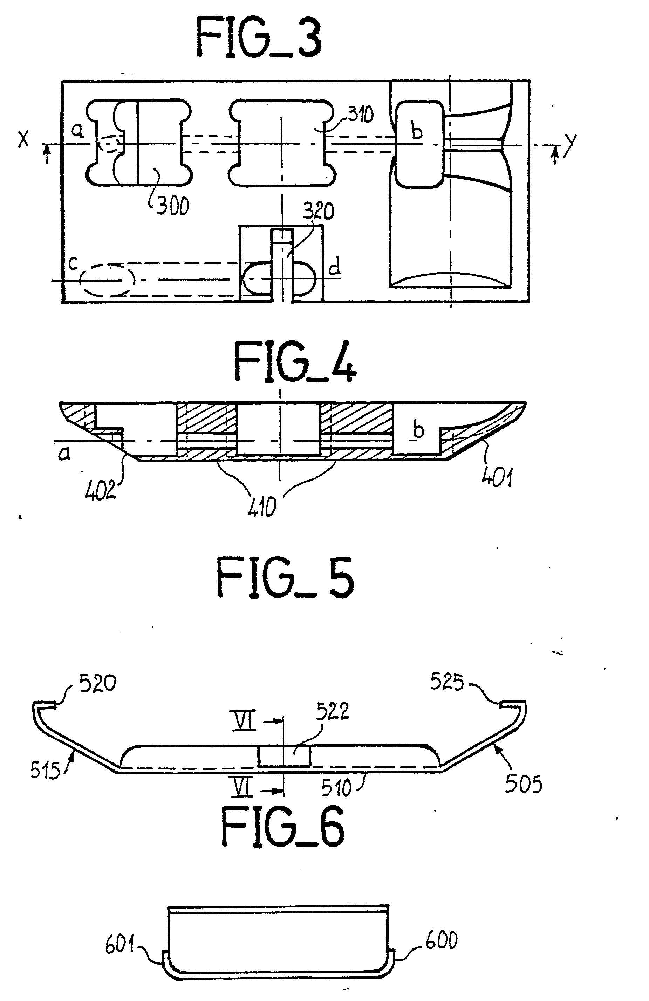

Les figures 3 et 4 montrent le sabot en vue de dessus et en coupe. Il peut être usiné dans un bloc de métal de qualité courante par exemple de l'aluminium ou de l'acier.

Les deux bielles 230 et 240 sont articulées à des noix de cardan non représentées, placées dans des logements 300 et 310, et qui pivotent autour d'un premier axe, non représenté, placé dans un perçage ab.

Un deuxième axe, dont seule une extrémité 227 est vue sur la figure 2, pivote dans un perçage cd (figure 3). Cet axe présente un perçage transversal dans lequel l'extrémité, recourbée à 90°, d'une tige de détection de roulis non représentée, est enfilée.

Durant l'exercice de conduite, le sabot se déplace verticalement et pivote en tangage et en roulis en suivant le relief de la maquette. Ces mouvements sont détectés par des capteurs potentiométriques non représentés, reliés par des tiges à différents points du mécanisme.

Le sabot présente, par exemple, une partie 410 plane, comportant des ouvertures et qui est comprise entre deux parties extrêmes 401 et 402, inclinées par rapport à celle-ci. La partie centrale correspond, à l'échelle voulue, à la surface déterminée par l'empattement et la voie du véhicule simulé.

Les parties extrêmes 401, 402 sont inclinées d'un angle permettant au sabot de franchir les obstacles simulés dans des conditions identiques à celles du franchissement des obstacles réels par le véhicule, et plus particulièrement par un char de combat. Il est évident que la forme de ce sabot pourrait-être différente en vue de s'adapter à la simulation d'un véhicule d'un autre type ou de pouvoir glisser directement au contact de la maquette. Dans l'exemple décrit en raison, entre autres, des ouvertures dans la partie plane, le sabot est garni du patin 220.

Ce patin est représenté en élévation et en coupe sur les figures 5 et 6. Sa forme correspond à celle du sabot.

Il est obtenu à partir d'un flan en forme de rectangle, de faible épaisseur, par exemple en cuivre ou en un alliage cuivre/béryllium.

Quatre découpes rectangulaires effectuées aux quatre sommets permettent ensuite par pliage de former un patin présentant une partie centrale plane et rectangulaire ainsi que deux paires d'ailes de dimensions inégales.

Les ailes les plus longues 505 et 515 sont obtenues, par un premier pliage, suivant les petits côtés du rectangle, puis par un deuxième pliage à leur extrémité, parallèlement à la partie centrale pour former un pli d'accrochage élastique du patin au sabot (520 et 525).

Les ailes les plus courtes sont obtenues simplement par deux pliages à 90° suivant les grands côtés du rectangle, et forment deux rebords latéraux de retenue du patin au sabot.

Dans l'exemple décrit une découpe 522 est faite dans un des rebords pour le passage et le pivotement de la tige de détection du roulis.

Le sabot et le patin ainsi définis ont permis jusqu'ici une simulation estimée suffisante du mouvement des chars de combat.

Néanmoins, il apparaît que leur partie centrale plane, n'est pas l'image, de la ou des surfaces d'appui, ni des éléments nécessaires à cet appui sur le sol, de la plupart des véhicules.

En particulier, elle ne peut assurer une restitution exacte du mouvement d'un véhicule qui franchit un obstacle isolé.

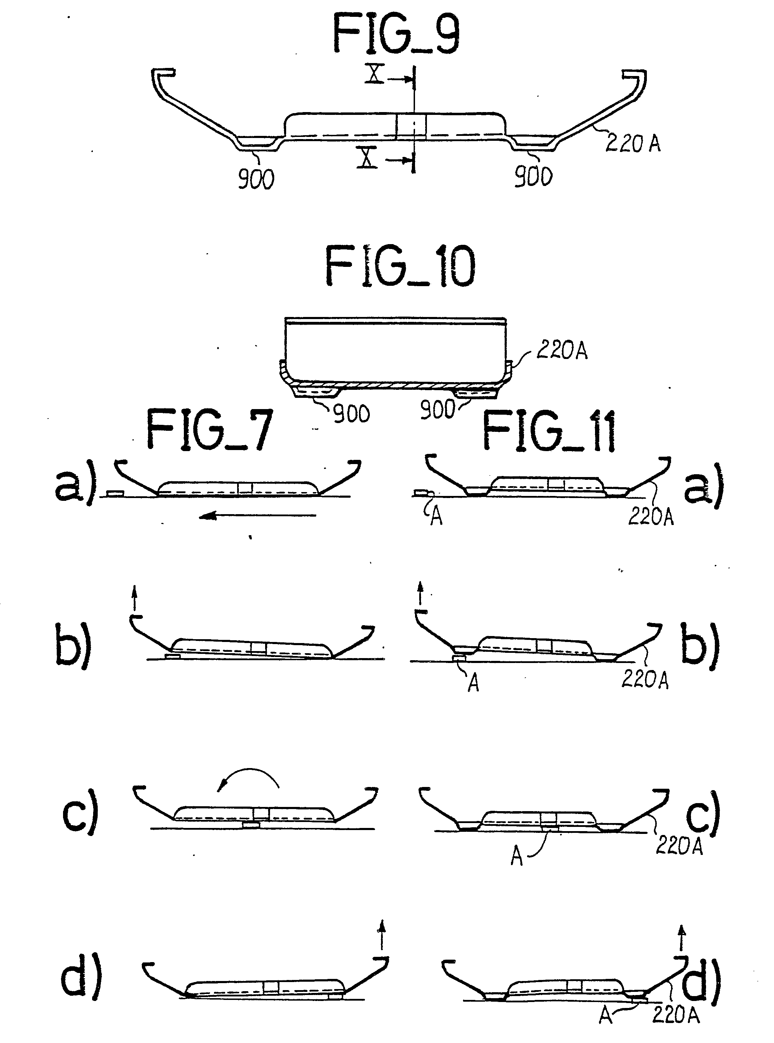

La figure 7 montre en effet que lors du passage, par exemple du patin, sur un tel obstacle, un basculement non réaliste de ce patin, et du poste de conduite du simulateur, se produit lorsque le centre du patin passe sur l'obstacle (figure 7c).

Par contre, l'observation du mouvement d'un char de combat sur un obstacle isolé 82 (figure 8) montre que, très sensiblement comme un véhicule à quatre roues, le char effectue un mouvement de tangage, accompagné éventuellement de roulis lorsque l'obstacle s'engage sous les premiers galets 81, et revient à l'horizontale dès que l'obstacle se trouve sous les galets centraux 80.

L'objet du détecteur de relief selon l'invention est donc, dans le cas d'un obstacle isolé de hauteur inférieure à la garde au sol du véhicule, de ne provoquer un mouvement de tangage et/ou de roulis du poste de conduite du simulateur que lorsque les points de ce détecteur, correspondant à l'emplacement des roues ou des galets extrêmes du véhicule, ou encore correspondant aux zones de ce dernier où la suspension est de plus forte raideur, passent sur l'obstacle simulé.

Une caractéristique du détecteur de relief selon l'invention est que la surface de son patin prévue pour glisser sur la maquette, comporte des parties en relief en correspondance avec les emplacements des roues ou des galets extrêmes du véhicule ou avec les zones de ce dernier où la suspension est de plus forte raideur.

D'autres caractéristiques du détecteur de relief selon l'invention apparaîtront dans la description qui fait suite, d'un exemple de réalisation non limitatif, concernant un patin, mais qui montrera que l'invention peut aussi bien concerner un sabot. Cette description étant illustrée par le dessin annexé, sur lequel :

- les figures 1 à 8, déjà mentionnées, concernent l'art antérieur ;
- les figures 9 et 10 représentent respectivement en élévation et en coupe selon X-X, un patin selon l'invention ;
- la figure 11 représente les diverses phases du passage sur un obstacle, d'un patin selon l'invention.

Un premier mode d'exécution du patin selon l'invention consiste, à partir d'un patin 220 selon l'art antérieur, à réaliser les parties en relief 900 par emboutissage ou par formage à la pince. Le patin 220A représenté sur les figures 9 et 10 comporte aux quatre coins de sa base des parties en relief 900. Cet exemple correspond à un char de combat à chenilles ou à un véhicule à quatre roues. Le nombre et l'emplacement de ces parties en relief sont éventuellement variables suivant le véhicule simulé.

Un autre mode d'exécution, non représenté, consiste à rapporter sur un patin ou sur un sabot selon l'art antérieur, des pastilles de forme appropriée à leur fixation et à la simulation, par exemple en plastique et par collage, ou par d'autres moyens de fixation, aux endroits du patin ou du sabot définis comme devant donner lieu à un mouvement de tangage ou de roulis.

La figure 11 montre le mouvement beaucoup plus réaliste, du patin 220A selon l'invention lorsque ses parties en relief 220A passent sur un obstacle isolé A.

## Revendications

1. Détecteur de relief (14) pour simulateur de mouvement de véhicule, du type monté sur un chariot (16) se déplaçant sur un portique (12) au-dessus d'une maquette en relief d'un terrain (11), les déplacements du chariot et du portique étant commandés par un calculateur selon les actions de l'utilisateur sur les commandes, la partie inférieure (15) du détecteur comportant principalement un système optique (215) et un ensemble détecteur de relief formé par un sabot (225), et un patin (220), caractérisé par le fait que la surface du patin, prévue pour glisser sur la maquette, comporte des parties en relief (900), en correspondance avec les emplacements des roues ou des galets extrêmes (81) du véhicule simulé, ou avec les zones de ce dernier où la suspension est de plus forte raideur.

2. Détecteur de relief selon la revendication 1, caractérisé par le fait que les parties en relief sont réalisées par emboutissage ou par formage à la pince.

3. Détecteur de relief selon la revendication 1, caractérisé par le fait que l'on rapporte sur le patin ou sur le sabot des pastilles de forme appropriée à leur fixation et à la simulation.

## Claims

1. A relief detector (14) for a device simulating the movement of a vehicle, of the type mounted on a carriage (16) which can be displaced on a crcss-beam above a relief model of a landscape (11), the displacements of the carriage and of the cross-beam being controlled by a computer according to a user's actions on the control means, the lower part (15) of the detector mainly comprising an optical system (215) and a relief detector assembly constituted by a sabot (225) and a sliding shoe (220), characterized in that the sliding shoe surface provided to slide on the model comprises projecting portions (900), the locations of which correspond to the positions of the wheels or outermost rollers (81) of the simulated vehicle or to the zones of the latter in which the suspension shows the highest stiffness.

2. A relief detector according to claim 1, characterized in that the projecting portions are realised by coining or by shaping with tongs.

3. A relief detector according to claim 1, characterized in that pastilles, the shape of which is adapted to their fixation and to the simulation, are applied to the sliding shoe or the sabot.

**Patentansprüche**

1. Reliefdetektor (14) für einen Fahrzeugbewegungssimulator, wobei der Detektor auf einem Wagen (16) montiert ist, der sich auf einem Tragegerüst (12) oberhalb eines Reliefmodells eines Geländes (11) verschiebt, wobei die Verschiebungen des Wagens und des Tragegerüsts von einem Rechner gesteuert werden, auf den der Benutzer über Steuermittel einwirkt, und wobei der untere Teil (15) des Detektors im wesentlichen ein optisches System (215) und eine Reliefdetektoreinheit aufweist, die aus einem Fuß (225) und einem Gleitschuh (220) besteht, dadurch gekennzeichnet, daß die Gleitfläche des Gleitschuhs, die auf dem Modell gleiten soll, vorstehende Bereiche (900) an den entsprechenden Stellen wie die Räder oder äußersten Rollen (81) des simulierten Fahrzeugs oder wie die Zonen dieses Fahrzeugs aufweist, an denen die Aufhängung am härtesten ist.

2. Reliefdetektor nach Anspruch 1, dadurch gekennzeichnet, daß die vorstehenden Bereiche durch Ausprägung oder Formung mit einer Zange hergestellt sind.

3. Reliefdetektor nach Anspruch 1, dadurch gekennzeichnet, daß auf den Gleitschuh oder den Fuß Pflöcke einer für ihre Befestigung und die Simulierung geeigneten Form aufgebracht sind.

# FIG_1

# FIG_8

# FIG_2

200

240

215

230

227    225    220

# FIG_3

X

a

300

310

b

c

320

d

# FIG_4

a

402

410

b

401

# FIG_5

520

522

VI

VI

525

515

510

505

# FIG_6

601

600

# FIG_9

900        900        220A

# FIG_10

220A

900   900

# FIG_7         FIG_11

a)                        a)
                         A        220A

b)                        b)
                         A        220A

c)                        c)
                         A        220A

d)                        d)
                         A   220A

4